(19) **Europäisches Patentamt**
**European Patent Office**
**Office européen des brevets**

(11) **EP 4 021 747 B1**

(12) **EUROPÄISCHE PATENTSCHRIFT**

(45) Veröffentlichungstag und Bekanntmachung des Hinweises auf die Patenterteilung:
**12.07.2023 Patentblatt 2023/28**

(21) Anmeldenummer: **20756778.5**

(22) Anmeldetag: **28.07.2020**

(51) Internationale Patentklassifikation (IPC):
**B60K 1/00** *(2006.01)* **B60K 1/02** *(2006.01)*

(52) Gemeinsame Patentklassifikation (CPC):
**B60K 1/00; B60K 1/02;** B60Y 2400/72; B60Y 2400/73

(86) Internationale Anmeldenummer:
**PCT/EP2020/071288**

(87) Internationale Veröffentlichungsnummer:
**WO 2021/037464 (04.03.2021 Gazette 2021/09)**

(54) **ANTRIEBSSTRANG FÜR EIN FAHRZEUG**

DRIVE TRAIN FOR A VEHICLE

CHAÎNE CINÉMATIQUE POUR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.08.2019 DE 102019123367**

(43) Veröffentlichungstag der Anmeldung:
**06.07.2022 Patentblatt 2022/27**

(73) Patentinhaber: **KNORR-BREMSE Systeme für Nutzfahrzeuge GmbH**
**80809 München (DE)**

(72) Erfinder: **GEIS-ESSER, Daniel**
**81377 München (DE)**

(56) Entgegenhaltungen:
CN-A- 106 560 336    US-A1- 2005 119 083
US-A1- 2012 157 255    US-A1- 2014 278 041

**EP 4 021 747 B1**

**Beschreibung**

Die vorliegende Erfindung betrifft einen Antriebsstrang für ein Fahrzeug, ein Fahrzeug mit einem solchen Antriebsstrang, ein Verfahren zur Steuerung eines solchen Antriebsstrangs sowie ein Computerprogrammprodukt zur Ausführung eines solchen Verfahrens.

Zur Änderung der Übersetzung von Fahrzeuggetrieben während der Fahrt sind schaltbare Getriebe bekannt. Diese verfügen üblicherweise über die nachteilige Eigenschaft, dass bei einem Schaltvorgang eine Zugkraftunterbrechung erfolgt, die als unkomfortabel von den Fahrzeuginsassen wahrgenommen wird.

Um diesem Problem zu begegnen wurden Getriebe entwickelt, die entweder gar keine Zugkraftunterbrechung oder nur eine geringe Zugkraftunterbrechung bei Schaltvorgängen aufweisen. Zu nennen sind hier insbesondere CVT-Getriebe, Doppelkupplungsgetriebe und Getriebe mit hydrodynamischem Drehmomentwandler. Diese Getriebe weisen jedoch wiederum Nachteile auf. Bei einem CVT-Getriebe wird das Drehmoment durch Reibung, beispielsweise zwischen zwei gegenläufigen Kegeln mit dazwischen angeordnetem Übertragungselement oder mittels Kegelscheiben, die reibend mit einer Kette in Kontakt stehen, übertragen. Die übertragbare Leistung bzw. das übertragbare Drehmoment sind hier aufgrund der Reibung stark eingeschränkt. Ein Doppelkupplungsgetriebe weist eine hohe bauliche Komplexität auf und ein Getriebe mit einem hydrodynamischen Drehmomentwandler ist mit hohen Verlusten behaftet, was dazu führt, dass der Drehmomentwandler hauptsächlich beim Anfahren verwendet wird.

In diesem Kontext offenbart die US 2012/157255 A1 eine integrierte Antriebsstranganordnung, die in Kombination einen Elektromotor mit einer hohlen Motorwelle, die sich entlang der Achse des Motors erstreckt, und ein stufenlos verstellbares Getriebe, das neben dem Motor angeordnet ist und eine hohle CVT-Welle aufweist, sowie ein Differenzial und ein Paar Ausgangswellen, die sich von dem Differenzial durch die hohle Motorwelle und die hohle CVT-Welle erstrecken, umfasst.

Der Elektromotor, das stufenlos verstellbare Getriebe und das Differenzial sind entlang einer gemeinsamen Achse axial ausgerichtet.

Die US 2005/119083 A1 betrifft ein hybrides Antriebssystem mit einer steuerbaren stufenlosen Übersetzung der Antriebsleistung aus mehreren Antrieben durch eine komplexe Kombination derselben. Das hybride Antriebssystem umfasst mindestens eine elektrische Antriebseinrichtung als ersten Antrieb des Hybridsystems, mindestens eine Verbrennungskraftmaschine, die mit herkömmlichem Kraftstoff arbeitet, als zweiten Antrieb des Hybridsystems, mindestens eine automatische Kupplung zwischen der elektrischen Antriebseinrichtung und der Verbrennungskraftmaschine, mindestens ein stufenloses Getriebe mit kontinuierlich variabler Übersetzung, das eine weitere Antriebseinrichtung zum Selbstantrieb aufweist, und mindestens eine Steuereinrichtung zur Steuerung der Zusammenwirkung der elektrischen Antriebseinrichtung, der Verbrennungskraftmaschine und der automatischen Kupplung.

Die US 2014/278041 A1 offenbart zudem ein hydrostatisches mechanisches CVT-Getriebe und die CN 106 560 336 A ein elektrisches CVT-Getriebe.

Der vorliegenden Erfindung liegt daher die Aufgabe zugrunde, eine Möglichkeit zu schaffen, einen Antriebsstrang mit einer stufenlosen Übersetzung zu realisieren, der die oben genannten Probleme löst.

Diese Aufgabe wird durch die Gegenstände der unabhängigen Ansprüche gelöst. Vorteilhafte Weiterbildungen sind Gegenstand der Unteransprüche.

Nachfolgend werden an mehreren Stellen Zwischenelemente genannt, die in einer Verbindung von unterschiedlichen Elementen des Antriebsstrangs vorgesehen sind. Darunter sind insbesondere Übersetzungsstufen, Getriebe, Differentiale Drehmomentwandler oder Kupplungen zu verstehen. Allerdings ist diese Aufzählung nicht als abschließend zu sehen. Scheinen dem Fachmann andere Zwischenelemente ebenso sinnvoll, so entsprechen diese ebenfalls dem Gegenstand der Erfindung.

Erfindungsgemäß ist ein Antriebsstrang für ein Fahrzeug, insbesondere für ein Nutzfahrzeug, vorgesehen, mit mindestens einem Getriebe, wobei das mindestens eine Getriebe folgendes aufweist:

- eine Primäreingangswelle, die dazu ausgebildet ist, mit einem Primärantrieb verbunden zu werden;
- eine Sekundäreingangswelle, die dazu ausgebildet ist, mit einem Sekundärantrieb verbunden zu werden;
- eine Ausgangswelle, die dazu ausgebildet ist, Leistung, die durch die Primäreingangswelle in das mindestens eine Getriebe geleitet wurde, abzugeben; und
- ein Umlaufgetriebe, das zwischen der Primäreingangswelle und der Ausgangswelle angeordnet ist und das dazu ausgebildet ist, eine stufenlose Einstellung einer Übersetzung zwischen der Primäreingangswelle und der Ausgangswelle aufgrund der Drehzahl der Sekundäreingangswelle einzustellen.

Das Umlaufgetriebe weist bevorzugt drei Wellen auf, die besonders bevorzugt koaxial zueinander angeordnet sind.

Vorzugsweise sind die Primäreingangswelle, die Sekundäreingangswelle und/oder die Ausgangswelle direkt mit einer der Wellen des Umlaufgetriebes verbunden. Alternativ zu einer direkten Verbindung können Zwischenelemente, insbesondere Übersetzungsstufen, Getriebe, Drehmomentwandler oder Kupplungen, vorgesehen sein.

Das Prinzip der stufenlosen Einstellung der Übersetzung erfolgt durch Vorgabe der Drehzahl der Sekundäreingangswelle. Ist gleichzeitig die Drehzahl der Ausgangswelle vorgegeben, beispielsweise durch eine aktuelle Fahrzeuggeschwindigkeit, so ist die Drehzahl der Primäreingangswelle vorgegeben. Bei einem Umlaufgetriebe mit einem Sonnenrad, einer Stegwelle und einem Hohlrad, die direkt oder über Zwischenelemente mit der Primäreingangswelle, der Sekundäreingangswelle und der Ausgangswelle verbunden sind, können die Drehzahlen nach der Willis-Gleichung berechnet werden:

$$n_{Sonnenrad} - i_0 \times n_{Hohlrad} - (1 - i_0) \times n_{Stegwelle} = 0$$

n; steht dabei für die einzelnen Drehzahlen, $i_0$ für die Standübersetzung des Umlaufgetriebes, bei der gilt:

$$i_0 = n_{Sonnenrad} / n_{Hohlrad},$$

wobei gleichzeitig die Stegwelle festgehalten wird und es gilt:

$$n_{Stegwelle} = 0.$$

Die Willis-Gleichung stellt somit eine kinematische Beziehung zwischen den drei Wellen des Umlaufgetriebes her. Bei Vorgabe von zwei Drehzahlen ist stets die dritte Drehzahl festgelegt.

Vorzugsweise ist zwischen der Primäreingangswelle, der Sekundäreingangswelle und/oder der Ausgangswelle einerseits und dem Umlaufgetriebe andererseits eine Zwischenübersetzung angeordnet. Auf diese Weise kann beispielsweise ein zu groß bauendes Umlaufgetriebe vermieden werden. Die Zwischenübersetzung kann insbesondere als Zahnradstufe ausgebildet sein, wobei auch komplexere Übersetzungen bis hin zu schaltbaren Getrieben denkbar sind. Insbesondere zwischen Primäreingangswelle und Umlaufgetriebe und/oder zwischen Umlaufgetriebe und Ausgangswelle kann ein schaltbares Getriebe vorgesehen sein.

Vorzugsweise ist die Primäreingangswelle direkt oder über Zwischenelemente mit einem Sonnenritzel des Umlaufgetriebes verbunden. Alternativ oder zusätzlich ist die Sekundäreingangswelle direkt oder über Zwischenelemente mit einer Stegwelle des Umlaufgetriebes verbunden. Alternativ oder zusätzlich ist die Ausgangswelle direkt oder über Zwischenelemente mit einem Hohlrad des Umlaufgetriebes verbunden.

Alternativ sind jedoch auch andere Konfigurationen möglich. Die Primäreingangswelle kann auch direkt oder über Zwischenelemente mit einer Stegwelle oder einem Hohlrad des Umlaufgetriebes verbunden sein. Die Sekundäreingangswelle kann auch direkt oder über Zwischenelemente mit einem Sonnenritzel des Umlaufgetriebes oder mit einem Hohlrad des Umlaufgetriebes verbunden sein. Die Ausgangswelle kann auch direkt oder über Zwischenelemente mit einem Sonnenritzel oder mit einer Stegwelle des Umlaufgetriebes verbunden sein.

Bei einer Verbindung der Primäreingangswelle mit dem Sonnenritzel, der Sekundäreingangswelle mit der Stegwelle und der Ausgangswelle mit dem Hohlrad des Umlaufgetriebes, wird somit erfindungsgemäß eine stufenlose Übersetzung zwischen der Primäreingangswelle und der Ausgangswelle durch eine stufenlose Einstellung der Übersetzung zwischen dem Sonnenritzel und dem Hohlrad des Umlaufgetriebes realisiert, wobei die stufenlose Einstellung durch die Drehzahl der Sekundäreingangswelle, die auf die Stegwelle wirkt, erfolgt.

Vorzugsweise weist das mindestens eine Getriebe einen Pfad auf, der von der Primäreingangswelle ausschließlich über das Umlaufgetriebe zu der Ausgangswelle führt. Alternativ oder zusätzlich weist das mindestens eine Getriebe einen weiteren Pfad auf, der von der Sekundäreingangswelle ausschließlich über das Umlaufgetriebe zu der Ausgangswelle führt. Diese speziellen Konfigurationen zeichnen sich durch geringen Platzbedarf, insbesondere in einer Erstreckungsrichtung parallel zu den Achsen der Primäreingangswelle, der Sekundäreingangswelle und/oder der Ausgangswelle, aus. Dadurch kann vorteilhafterweise ein kompakt bauendes Getriebe erreicht werden.

Vorzugsweise weist der Antriebsstrang ferner einen Primärantrieb auf, der mit der Primäreingangswelle des mindestens einen Getriebes verbunden ist oder der dazu ausgebildet ist, damit verbunden zu werden. Die Verbindung erfolgt dabei direkt oder über Zwischenelemente. Alternativ oder zusätzlich weist der Antriebsstrang mindestens einen Sekundärantrieb auf, der mit mindestens einer Sekundäreingangswelle des mindestens einen Getriebes verbunden ist oder der dazu ausgebildet ist, damit verbunden zu werden. Die Verbindung erfolgt dabei direkt oder über Zwischenelemente.

Vorzugsweise ist die Ausgangswelle des mindestens einen Getriebes direkt oder über Zwischenelemente, vorzugsweise über ein Differential, mit zumindest einem Rad des Fahrzeugs verbunden oder dazu ausgebildet, damit verbunden zu werden. Die Ausgangswelle dient somit insbesondere dazu, Leistung zu mindestens einem Rad des Fahrzeugs zu leiten, um das Fahrzeug anzutreiben.

Vorzugsweise weist der Antriebsstrang mindestens ein zweites Getriebe, wie oben beschrieben, auf, wobei eine Ausgangswelle eines der mindestens zwei Getriebe mit einem oder mehreren Rädern auf einer Seite einer Längsrichtung des Fahrzeugs verbunden ist, und eine Ausgangswelle eines anderen der mindestens zwei Getriebe mit einem oder mehreren Rädern auf der anderen Seite einer Längsrichtung des Fahrzeugs verbunden ist. Somit wird vorteilhafterweise eine Möglichkeit geschaffen, Leistung, die über die Ausgangswellen der Getriebe bereitgestellt wird, auf Räder zu beiden Seiten einer Längsrichtung des Fahrzeugs zu führen, um beispielsweise fahrdynamische Regelungen umsetzen zu können. Alternativ oder zusätzlich kann eine Ausgangswelle eines der mindestens zwei Getriebe mit einem oder mehreren Rädern einer Achse des Fahrzeugs verbunden sein, und eine Ausgangswelle eines anderen der mindestens zwei Getriebe kann mit einem oder mehreren Rädern einer anderen Achse des Fahrzeugs verbunden sein. Auf diese Weise kann ein Antrieb des Fahrzeugs mit mehreren angetriebenen Achsen, insbesondere ein Allradantrieb, realisiert werden. Vorzugsweise sind die einzelnen Ausgangswellen der mindestens zwei Getriebe direkt oder über Zwischenelemente, vorzugsweise über ein Differential, mit mindesten einem Rad des Fahrzeugs verbunden.

Vorzugsweise ist der Antriebsstrang dazu ausgebildet, die Übersetzung zwischen der Primäreingangswelle und der Ausgangswelle der mindestens zwei Getriebe, zumindest auf jeder Seite der Längsrichtung des Fahrzeugs, vorzugsweise radindividuell, über die Drehzahl der Sekundäreingangswellen der mindestens zwei Getriebe einzustellen. Durch diese Ausbildung wird insbesondere die Möglichkeit geschaffen eine Differentialfunktion oder auch eine Differentialsperre - bei gewollt gleicher Drehzahl der radindividuellen Sekundärantriebe - umzusetzen.

Vorzugsweise weist der Antriebsstrang zumindest eine Einrichtung zur Unterbrechung der Verbindung zwischen dem Umlaufgetriebe und der Primäreingangswelle des mindestens einen Getriebes auf. Alternativ oder zusätzlich weist der Antriebsstrang zumindest eine Einrichtung zur Unterbrechung der Verbindung zwischen dem Umlaufgetriebe und der Sekundäreingangswelle des mindestens einen Getriebes auf. Alternativ oder zusätzlich weist der Antriebsstrang zumindest eine Einrichtung zur Unterbrechung der Verbindung zwischen dem Umlaufgetriebe und der Ausgangswelle des mindestens einen Getriebes auf. Dabei handelt es sich insbesondere um Kupplungen, wie Reib- bzw. Lamellenkupplungen, oder auch formschlüssige Kupplungen, wie Klauenkupplungen.

Vorzugsweise weist der Antriebsstrang zumindest eine Einrichtung zur Umwandlung von Drehmoment bzw. Drehzahl zwischen dem Umlaufgetriebe und der Primäreingangswelle des mindestens einen Getriebes auf. Alternativ oder zusätzlich weist der Antriebsstrang zumindest eine Einrichtung zur Umwandlung von Drehmoment bzw. Drehzahl zwischen dem Umlaufgetriebe und der Sekundäreingangswelle des mindestens einen Getriebes auf. Alternativ oder zusätzlich weist der Antriebsstrang zumindest eine Einrichtung zur Umwandlung von Drehmoment bzw. Drehzahl zwischen dem Umlaufgetriebe und der Ausgangswelle des mindestens einen Getriebes auf. Dabei handelt es sich insbesondere um ein- oder mehrstufige Übersetzungen, schaltbare Getriebe und/oder Drehmomentwandler.

Der Antriebsstrang ist vorzugsweise dazu ausgebildet, die Sekundäreingangswelle festzubremsen, um die Welle des Umlaufgetriebes festzuhalten, die mit der Sekundäreingangswelle verbunden ist. Insbesondere handelt es sich dabei um die Stegwelle, so dass bei festgebremster Sekundäreingangswelle erreicht wird, das Umlaufgetriebe mit Standübersetzung zu betreiben. Das Festbremsen selbst kann insbesondere durch eine spezielle Ausbildung des Sekundärantriebs oder durch spezielle Einrichtungen, wie Bremsen erreicht werden. Der Sekundärantrieb kann beispielsweise ein Gegenmoment auf die Sekundäreingangswelle aufprägen, das so bemessen ist, dass die Sekundäreingangswelle keine Drehbewegung durchführt.

Vorzugsweise weist der Primärantrieb einen Verbrennungs- und/oder einen Elektromotor auf. Der Primärantrieb ist insbesondere dazu ausgebildet, Leistung, die für den Antrieb des Fahrzeugs benötigt wird, zur Verfügung zu stellen.

Alternativ oder zusätzlich weist der Sekundärantrieb einen Elektromotor auf. Der Sekundärantrieb ist insbesondere dazu ausgebildet, der Sekundäreingangswelle eine benötigte Drehzahl aufzuprägen, um die gewünschte Übersetzung zwischen der Primäreingangswelle und der Ausgangswelle in dem Getriebe des Antriebstrangs einzustellen. Der Sekundärantrieb, insbesondere der Elektromotor, weist vorzugsweise gegenüber dem Primärantrieb eine geringere Maximalleistung auf. Diese ist vorzugsweise kleiner als 80%, besonders bevorzugt kleiner als 50% und insbesondere kleiner als 20% der Maximalleistung des Primärantriebs. Bevorzugt ist der Sekundärantrieb lediglich dazu ausgebildet, eine Drehzahl auf die Sekundäreingangswelle aufzuprägen, wobei dabei kein wesentlicher Leistungseintrag in das Getriebe erfolgt. Daher kann der Sekundärantrieb hinsichtlich seiner Maximalleistung gegenüber dem Primärantrieb geringer ausgelegt werden. Dies führt nicht zuletzt zu Bauraum- und Kostenvorteilen.

Der Antriebsstrang weist vorzugsweise ein Steuermittel auf, das dazu ausgebildet ist, den Antriebsstrang zu steuern. Besonders bevorzugt weist das Steuermittel dabei ein Steuergerät auf. Das Steuermittel ist vorzugsweise zur Durchführung des weiter unten beschriebenen Verfahrens ausgebildet. Insbesondere ist das Steuermittel dazu ausgebildet, eine benötigte Leistung, die über den Primärantrieb auf die Primäreingangswelle aufgeprägt werden soll, und/oder eine Drehzahl, die der Sekundäreingangswelle über den Sekundärantrieb aufgeprägt werden soll, zu ermitteln und insbesondere den Primärantrieb und/oder den Sekundärantrieb entsprechend anzusteuern. Das Steuermittel ist schließlich vorzugsweise durch ein Computerprogrammprodukt, insbesondere wie weiter unten beschrieben, dazu ausgebildet, das unten beschriebene Verfahren zur Steuerung des Antriebsstrangs durchzuführen.

Erfindungsgemäß ist ein Fahrzeug, insbesondere ein Nutzfahrzeug, vorgesehen, das einen Antriebsstrang, wie oben beschrieben, aufweist, wobei die Ausgangswelle des mindestens einen Getriebes mit mindestens einem Rad des Fahrzeugs direkt oder über Zwischenelemente, vorzugsweise über ein Differential, verbunden ist. Insbesondere im Nutzfahrzeugbereich ist es aus Gründen der Wirtschaftlichkeit erwünscht, dass sich eine Antriebsmaschine möglichst oft im verbrauchsgünstigsten Bereich befindet. Ein Nutzfahrzeug, das durch den Antriebsstrang, insbesondere durch die Leistung des Primärantriebs angetrieben wird, wird somit durch die stufenlose Übersetzung in diesem Bereich gehalten, wobei gleichzeitig im Vergleich zu Lösungen aus dem Stand der Technik höhere Momente bzw. höhere Leistungen von dem Primärantrieb zu der Ausgangswelle bzw. zu den Rädern geleitet werden können. Der Primärantrieb weist hier vorzugsweise einen Verbrennungsmotor, besonders bevorzugt einen Dieselmotor, auf. Es kann jedoch auch ein elektrisch angetriebenes Fahrzeug vorgesehen sein, bei dem der Primärantrieb einen Elektromotor aufweist. Ferner ist auch ein Hybridfahrzeug denkbar, bei dem der Primärantrieb sowohl einen Verbrennungs- als auch einen Elektromotor aufweist.

Erfindungsgemäß ist auch ein Verfahren zur Steuerung eines Antriebsstrangs, wie oben beschrieben, vorgesehen mit den Schritten:

- Aufprägen einer Leistung auf die Primäreingangswelle des mindestens einen Getriebes;
- Bestimmen einer benötigten Drehzahl der Sekundäreingangswelle des mindestens einen Getriebes, um zwischen der Primäreingangswelle und der Ausgangswelle des mindestens einen Getriebes eine geforderte Übersetzung einzustellen;
- Aufprägen der benötigten Drehzahl auf die Sekundäreingangswelle.

Vorzugsweise wird die Leistung, die auf die Primäreingangswelle aufgeprägt wird, entsprechend der Fahraufgabe bestimmt. So erfolgt eine Erhöhung der Leistung, wenn das Fahrzeug einen erhöhten Fahrwiderstand, beispielsweise an einer Steigung, erfährt. Dies erfolgt jedoch stets im Zusammenspiel mit der Übersetzung zwischen der Primäreingangswelle und der Ausgangswelle.

Das Aufprägen der Leistung auf die Primäreingangswelle erfolgt vorzugsweise durch einen oben beschriebenen Primärantrieb. Das Aufprägen der Drehzahl auf die Sekundäreingangswelle erfolgt vorzugsweise durch einen oben beschriebenen Sekundärantrieb.

Vorzugsweise wird die Übersetzung zwischen der Primäreingangswelle und der Ausgangswelle, zumindest auf jeder Seite der Längsrichtung des Fahrzeugs, vorzugsweise radindividuell, über die Drehzahl der Sekundäreingangswelle eingestellt. Auf diese Weise können unterschiedliche Übersetzungen an den angetriebenen Rädern des Fahrzeugs eingestellt werden. Dadurch kann beispielsweise eine Differentialfunktion bzw. auch eine Differentialsperre realisiert werden.

Vorzugsweise wird auf die Sekundäreingangswelle des mindestens einen Getriebes lediglich ein Drehmoment aufgeprägt, um die benötigte Drehzahl einzustellen. Die Leistung, die auf die Sekundäreingangswelle aufgeprägt wird, wird dabei lediglich so hoch gewählt, dass sich die gewünschte Drehzahl einstellt. Insbesondere wird dadurch lediglich die Überwindung der internen Widerstände des Getriebes, wie der Reibung, erreicht. Die internen Widerstände des Getriebes können dabei durch Messung bzw. bei der Auslegung des Getriebes ermittelt werden und beispielsweise durch ein Steuermittel bei der Durchführung des Verfahrens, insbesondere durch eine Lookup-Table, berücksichtigt werden.

Erfindungsgemäß ist auch ein Computerprogrammprodukt mit Codemitteln vorgesehen, die dazu ausgebildet sind, wenn sie auf einer Datenverarbeitungsanlage ausgeführt werden, einen Antriebsstrang, wie oben beschrieben, nach einem Verfahren, wie oben beschrieben, zu steuern. Eine Datenverarbeitungsanlage kann dabei ein Steuermittel, insbesondere aufweisend ein Steuergerät, sein, auf dem die Codemittel aufgespielt und während des Betriebs des Antriebsstrangs ausgeführt werden können.

Nachfolgend werden bevorzugte Ausführungsformen der Erfindung anhand der beigefügten Zeichnungen beschrieben.

Im Einzelnen zeigen

Fig. 1    eine erste Ausführungsform eines erfindungsgemäßen Antriebsstrangs,
Fig. 2    eine spezielle Ausführungsform des Antriebsstrangs aus Fig. 1,
Fig. 3    eine zweite Ausführungsform eines erfindungsgemäßen Antriebsstrangs,
Fig. 4    eine dritte Ausführungsform eines erfindungsgemäßen Antriebsstrangs.

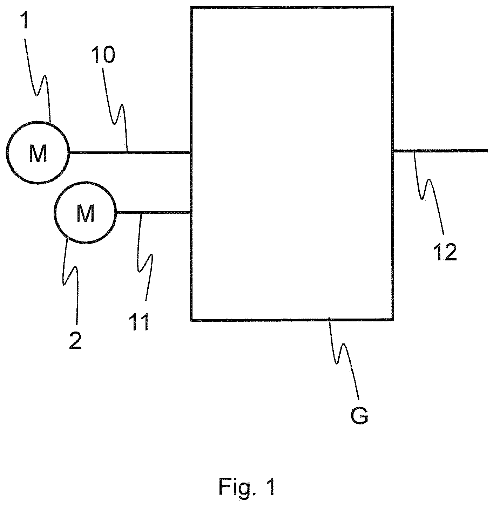

**Fig. 1** zeigt eine erste Ausführungsform eines erfindungsgemäßen Antriebsstrangs.

Es ist ein Antriebsstrang für ein Fahrzeug gezeigt, der ein Getriebe G aufweist. Der Antriebsstrang weist eine Primäreingangswelle 10 auf, die sich nach links aus dem Getriebe G erstreckt und die mit einem Primärantrieb 1 verbunden ist. Der Antriebsstrang weist außerdem eine Sekundäreingangswelle 11 auf, die sich nach links aus dem Getriebe G erstreckt und die mit einem Sekundärantrieb 2 verbunden ist. Schließlich weist der Antriebsstrang eine Ausgangswelle 12 auf, die sich nach rechts aus dem Getriebe G heraus erstreckt. Die Ausgangswelle 12 kann beispielsweise mit einem Differential des Fahrzeugs, in dem der Antriebsstrang vorgesehen ist, verbunden sein. Alternativ dazu kann die Ausgangswelle 12 auch direkt oder über andere Zwischenelemente mit einem Rad des Fahrzeugs verbunden sein.

Das Getriebe G ist dazu ausgebildet, eine Übersetzung zwischen der Primäreingangswelle 10 und der Ausgangswelle 12 stufenlos aufgrund der Drehzahl der Sekundäreingangswelle 11 einzustellen. Hierzu weist das Getriebe G ein Umlaufgetriebe (nicht dargestellt) auf.

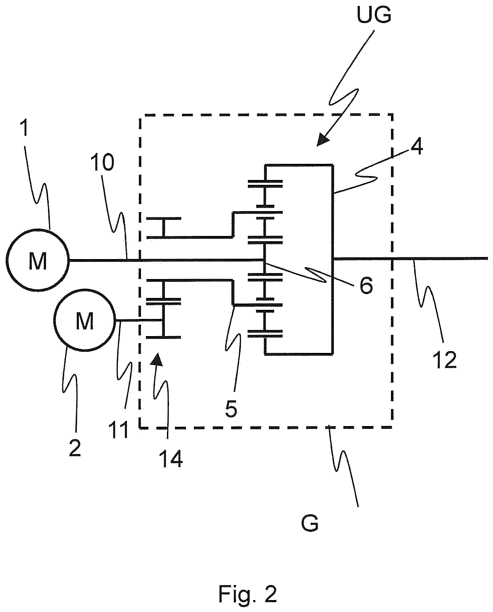

**Fig. 2** zeigt eine spezielle Ausführungsform des Antriebsstrangs aus Fig. 1. Im Inneren des Getriebes G, dessen Gehäuse hier als gestrichelter Kasten angedeutet ist, ist ein Umlaufgetriebe UG vorgesehen, das ein Sonnenritzel 6, eine Stegwelle 5, die Planetenräder trägt, und ein Hohlrad 4 aufweist. Das Sonnenritzel 6 ist dabei mit der Primäreingangswelle 10 und das Hohlrad 4 mit der Ausgangswelle 12 verbunden. Die Stegwelle 5 ist über eine Zwischenübersetzung 14, die hier eine Zahnradstufe aufweist, mit der Sekundäreingangswelle 11 verbunden. Die Stegwelle 5 ist schließlich als Hohlwelle ausgebildet, durch die sich die Primäreingangswelle 10 erstreckt.

Der Sekundärantrieb 2 kann schließlich dazu ausgebildet sein, die Stegwelle 5 festzuhalten, so dass das Umlaufgetriebe UG mit stehender Stegwelle 5 betrieben werden kann.

Im Übrigen entsprechen die weiteren Elemente und deren Aufbau der Darstellung aus Fig. 1, weswegen auf eine weitere Beschreibung verzichtet wird.

Die Funktionsweise des Antriebsstranges aus Fig. 2 stellt sich wie folgt dar.

Der Primärantrieb 1, beispielsweise aufweisend einen Verbrennungs- und/oder Elektromotor, speist eine mechanische Leistung über die Primäreingangswelle 10 in das Getriebe G, speziell auf das Sonnenritzel 6 des Umlaufgetriebes UG, ein. Diese Leistung wird über das Umlaufgetriebe UG an die Ausgangswelle 12 weitergeleitet und von dort an mindestens ein Rad des Fahrzeugs übertragen.

Steht nun die Stegwelle 5 bzw. wird sie durch den Sekundärantrieb 2 festgehalten, indem dieser die Sekundäreingangswelle 11 festbremst, so wird das Umlaufgetriebe UG mit der Standübersetzung betrieben. D.h. es herrscht eine feste Übersetzung zwischen der Primäreingangswelle 10 und der Ausgangswelle 12 vor.

Diese Übersetzung kann nun durch Änderung der Drehzahl der Stegwelle 5 verändert werden. Durch die oben in der Beschreibungseinleitung beschriebene Willis-Gleichung ergibt sich bei der Vorgabe einer Drehzahl der Sekundäreingangswelle 11 und durch die durch die Geschwindigkeit des Fahrzeugs vorgegebene Drehzahl der Ausgangswelle 12 automatisch die neue Drehzahl der Primäreingangswelle 10.

Dabei kann die Einstellung der Drehzahl der Sekundäreingangswelle 11 sowohl linksals auch rechtsdrehende Drehzahlen umfassen. Zudem muss nicht zwingend bei Beginn der Verstellung von einer stehenden oder festgehaltenen Sekundäreingangswelle 11 ausgegangen werden. Vielmehr kann die stufenlose Einstellung der Übersetzung ausgehend von jeder beliebigen Drehzahl der Sekundäreingangswelle 11 erfolgen.

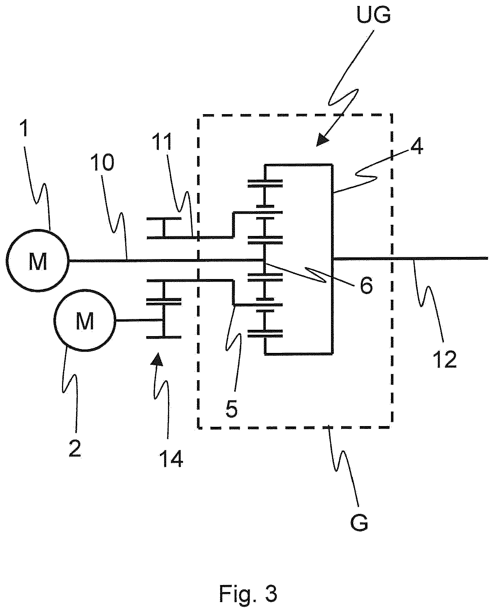

**Fig. 3** zeigt eine dritte Ausführungsform eines erfindungsgemäßen Antriebsstrangs.

Diese Ausführungsform gleicht in ihrem Aufbau der Ausführungsform aus Fig. 2. Allerdings wurde hier die Zwischenübersetzung 14 außerhalb des Gehäuses des Getriebes G vorgesehen. Somit ist die Stegwelle 5 in dieser Ausführungsform identisch mit der Primäreingangswelle 11 des Getriebes G.

Dadurch wird ein reduziertes Getriebe G ausgebildet, das lediglich über das Umlaufgetriebe UG sowie die Primäreingangswelle 10, die Sekundäreingangswelle 11 und die Ausgangswelle 12 verfügt. Es kann somit ein Pfad ausgemacht werden, der von der Primäreingangswelle 10 über das Umlaufgetriebe UG zu der Ausgangswelle 12 führt und der keine weiteren Elemente aufweist. Ein weiterer Pfad kann von der Stegwelle 5 über das Umlaufgetriebe UG zu der Ausgangswelle 12 ausgemacht werden. Auch dieser weitere Pfad weist keine weiteren Elemente auf.

Durch diese Konfiguration kann erreicht werden, dass ein relativ kompakt bauendes Getriebe G ausgebildet wird.

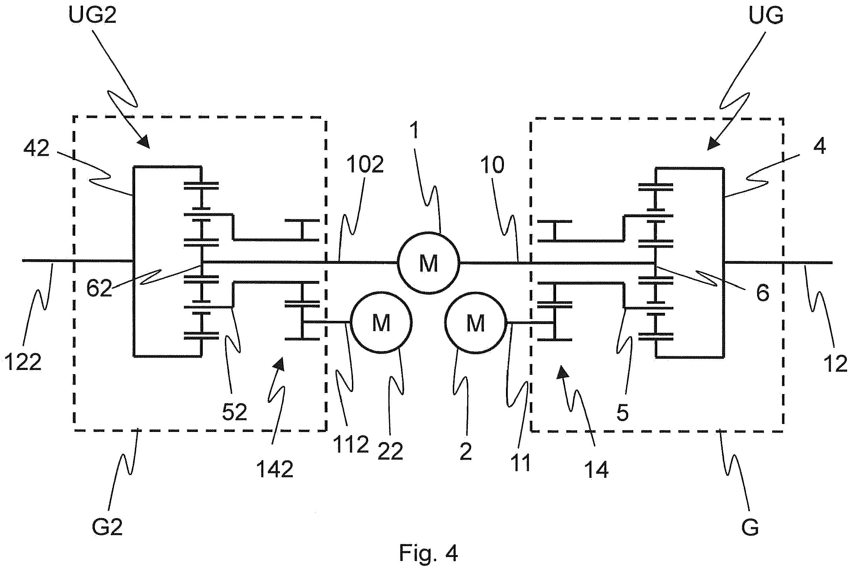

**Fig. 4** zeigt eine dritte Ausführungsform eines erfindungsgemäßen Antriebsstrangs.

Rechts ist eine Konfiguration entsprechend Fig. 2 gezeigt. Die Elemente wurden dabei mit gleichen Bezugszeichen versehen, so dass für die Erläuterung des Aufbaus auf die Beschreibung zu Fig. 2 verwiesen wird. Der Antriebsstrang ist ergänzt um einen zweiten Antriebsstrang der zu dem ersten Antriebsstrang gespiegelt ausgebildet ist und in der linken Zeichnungshälfte dargestellt ist. Sämtliche Elemente, die separat im linken Antriebsstrang vorhanden sind, wurden mit demselben Bezugszeichen wie im rechten Antriebsstrang versehen, wobei jeweils eine "2" am Ende des Bezugszeichens angefügt wurde. Somit weist der linke Antriebsstrang eine Primäreingangswelle 102 auf, die das Pendant zu der rechten Primäreingangswelle 10 bildet.

Beide Primäreingangswellen 10, 102 sind mit demselben Primärantrieb 1 verbunden. Allerdings ist die rechte Sekundäreingangswelle 11 mit einem Sekundärantrieb 2 und die linke Sekundäreingangswelle 112 mit einem Sekundärantrieb 22 verbunden. Dadurch kann die Antriebsleistung des Primärantriebs 1 sowohl auf die linke als auch auf die rechte Primäreingangswelle 10, 102 aufgeprägt werden, wobei gleichzeitig über die beiden Sekundärantriebe 2, 22 bzw. die damit verbundenen Sekundäreingangswellen 11, 112 eine jeweils individuelle Einstellung der Übersetzung zwischen der rechten Primäreingangswelle 10 und der rechten Ausgangswelle 12 einerseits und zwischen der linken Primäreingangswelle 102 und der linken Ausgangswelle 122 andererseits erfolgen kann.

Die Funktionsweise des rechten und des linken Antriebsstranges entspricht dabei der Funktionsweise des Antriebsstranges aus Fig. 2.

Der in Fig. 4 gezeigte Antriebsstrang kann beispielsweise als Antriebsachse eines Fahrzeugs fungieren, indem die linke Ausgangswelle 122 mit einem Rad auf der linken Seite des Fahrzeugs verbunden ist und die rechte Ausgangswelle 12 mit einem Rad auf der rechten Seite des Fahrzeugs, das auf derselben Achse sitzt, verbunden ist.

Der Antriebsstrang kann jedoch auch dazu genutzt werden, um einen Allrad- oder zumindest Mehrachsantrieb darzustellen. Hierzu kann beispielsweise eine weitere Konfiguration, wie in Fig. 4 gezeigt, mit Rädern einer weiteren Achse des Fahrzeugs verbunden werden. Zur Umsetzung eines Allradantriebs können schließlich sämtliche Achsen des Fahrzeugs wie in Fig. 4 gezeigt ausgebildet werden.

Die in Fig. 4 gezeigt Konfiguration kann jedoch auch dazu verwendet werden, um die Leistung des Primärantriebs an verschiedene Achsen des Fahrzeugs zu leiten. Beispielsweise kann die linke Ausgangswelle 122 mit einem Differential an einer Vorderachse des Fahrzeugs verbunden sein, so dass Leistung über eine stufenlose Übersetzung des Umlaufgetriebes UG2 an die Vorderachse gelangt. Gleichzeitig kann die rechte Ausgangswelle 12 mit einem Differential an einer Hinterachse des Fahrzeugs verbunden sein, so dass Leistung über eine stufenlose Übersetzung des Umlaufgetriebes UG an die Hinterachse gelangt.

Dabei ist bei all diesen Konfigurationen vorteilhaft, dass über die Sekundärantriebe 2, 22 eine stufenlose Einstellung der Übersetzung von der jeweiligen Primäreingangswelle 10, 102 zu der jeweiligen Ausgangswelle 12, 122 erfolgen kann.

Die Erfindung ist nicht auf die hier aufgeführten Ausführungsformen begrenzt. Vielmehr sind weitere Ausführungsformen durch Hinzufügen, Weglassen oder Vertauschen einzelner Merkmale erhältlich. Insbesondere kann bei der Konfiguration aus Fig. 4 auch vorgesehen sein, dass der Primärantrieb 1 nur mit der rechten Primäreingangswelle 10 verbunden ist, wobei ein weiterer Primärantrieb vorgesehen ist, der mit der linken Primäreingangswelle 102 verbunden ist. Auf diese Weise ist nicht nur eine unabhängige Einstellung der Übersetzung von der jeweiligen Primäreingangswelle 10, 102 zu der jeweiligen Ausgangswelle 12, 122 möglich, vielmehr kann nun auch eine individuelle Leistung auf die Primäreingangswelle 10, 102 geleitet werden.

Funktional gleichwertige Konfigurationen zu der Konfiguration aus Fig. 4 können zudem gebildet werden, indem die Antriebsstränge aus Fig. 1 und/oder Fig. 3 entsprechend kombiniert werden.

Schließlich können bei allen Ausführungsformen der Figuren 1 bis 4 Einrichtungen zur Unterbrechung der Drehmomentübertragung an der Primäreingangswelle 10, 102 an der Sekundäreingangswelle 11, 112 und/oder an der Ausgangswelle 12, 122 vorgesehen sein. Dabei handelt es sich insbesondere um Kupplungen, wie Reib- bzw. Lamellenkupplungen, oder auch formschlüssige Kupplungen, wie Klauenkupplungen. Die Kupplungen können schaltbar ausgebildet sein, um gezielt einen Antrieb 1, 2 oder auch die Ausgangswelle 12 abzukoppeln.

Es können bei allen Ausführungsformen der Figuren 1 bis 4 auch Einrichtungen zur Umwandlung von Drehmoment bzw. Drehzahl an der Primäreingangswelle 10, 102, an der Sekundäreingangswelle 11, 112 und/oder an der Ausgangswelle 12, 122 vorgesehen sein. Dabei handelt es sich vorzugsweise um Drehmomentwandler und/oder Übersetzungsstufen. Diese Einrichtungen können insbesondere schaltbar ausgebildet sein. Gerade Übersetzungsstufen können, neben der Ausbildung als EinGang-Übersetzung, bevorzugt als schaltbare Getriebe mit mehreren Gängen ausgebildet sein.

BEZUGSZEICHENLISTE

| | |
|---|---|
| 1 | Primärantrieb |
| 2 | Sekundärantrieb |
| 4 | Hohlrad |
| 5 | Steg |
| 6 | Sonnenritzel |
| 10 | Primäreingangswelle |
| 11 | Sekundäreingangswelle |
| 12 | Ausgangswelle |
| 14 | Zwischenübersetzung |
| 22 | Sekundärantrieb |
| 42 | Hohlrad |
| 52 | Steg |
| 62 | Sonnenritzel |

| 102 | Primäreingangswelle |
| 112 | Sekundäreingangswelle |
| 122 | Ausgangswelle |
| 142 | Zwischenübersetzung |
| G | Getriebe |
| G2 | zweites Getriebe |
| UG | Umlaufgetriebe |
| UG2 | Umlaufgetriebe |

**Patentansprüche**

1. Antriebsstrang für ein Fahrzeug mit mindestens einem Getriebe (G, G2), wobei das mindestens eine Getriebe (G, G2) folgendes aufweist:

   - eine Primäreingangswelle (10, 102), die dazu ausgebildet ist, mit einem Primärantrieb (1) verbunden zu werden;
   - eine Sekundäreingangswelle (11, 112), die dazu ausgebildet ist, mit einem Sekundärantrieb (2, 22) verbunden zu werden;
   - eine Ausgangswelle (12, 122), die dazu ausgebildet ist, Leistung, die durch die Primäreingangswelle (10, 102) in das mindestens eine Getriebe (G, G2) geleitet wurde, abzugeben; **gekennzeichnet durch**,
   - ein Umlaufgetriebe (UG, UG2), das dazu ausgebildet ist, eine stufenlose Einstellung einer Übersetzung zwischen der Primäreingangswelle (10, 102) und der Ausgangswelle (12, 122) aufgrund der Drehzahl der Sekundäreingangswelle (11, 112) einzustellen.

2. Antriebsstrang nach Anspruch 1, wobei
   die Primäreingangswelle (10, 102), die Sekundäreingangswelle (11, 112) und/oder die Ausgangswelle (12, 122) direkt mit einer der Wellen (4, 5, 6, 42, 52, 62) des Umlaufgetriebes (UG, UG2) verbunden sind.

3. Antriebsstrang nach Anspruch 1 oder 2, wobei
   zwischen der Primäreingangswelle (10, 102), der Sekundäreingangswelle (11, 112) und/oder der Ausgangswelle (12, 122) einerseits und dem Umlaufgetriebe (UG, UG2) andererseits eine Zwischenübersetzung (14, 142) angeordnet ist.

4. Antriebsstrang nach einem der vorangegangenen Ansprüche, wobei
   die Primäreingangswelle (10, 102) direkt oder über Zwischenelemente mit einem Sonnenritzel (6, 62) des Umlaufgetriebes (UG, UG2) und/oder die Sekundäreingangswelle (11, 112) direkt oder über Zwischenelemente mit einer Stegwelle (5, 52) des Umlaufgetriebes (UG, UG2) und/oder die Ausgangswelle (12, 122) direkt oder über Zwischenelemente mit einem Hohlrad (4, 42) des Umlaufgetriebes (UG, UG2) verbunden sind.

5. Antriebsstrang nach einem der vorangegangenen Ansprüche, wobei
   das mindestens eine Getriebe (G, G2) einen Pfad aufweist, der von der Primäreingangswelle (10, 102) ausschließlich über das Umlaufgetriebe (UG, UG2) zu der Ausgangswelle (12, 122) führt, und/oder wobei das mindestens eine Getriebe (G, G2) einen weiteren Pfad aufweist, der von der Sekundäreingangswelle (11, 112) ausschließlich über das Umlaufgetriebe (UG, UG2) zu der Ausgangswelle (12, 122) führt.

6. Antriebsstrang nach einem der vorangegangenen Ansprüche, weiter aufweisend:

   - einen Primärantrieb (1), der mit der Primäreingangswelle (10, 102) des mindestens einen Getriebes (G, G2) verbunden ist oder der dazu ausgebildet ist, damit verbunden zu werden; und/oder
   - mindestens einen Sekundärantrieb (2, 22), der mit mindestens einer Sekundäreingangswelle (11, 112) des mindestens einen Getriebes (G, G2) verbunden ist oder der dazu ausgebildet ist, damit verbunden zu werden.

7. Antriebsstrang nach einem der vorangegangenen Ansprüche, wobei
   die Ausgangswelle (12, 122) des mindestens einen Getriebes (G, G2) direkt oder über Zwischenelemente, vorzugsweise über ein Differential, mit zumindest einem Rad eines Fahrzeugs verbunden ist oder der dazu ausgebildet ist, damit verbunden zu werden.

8. Antriebsstrang nach Anspruch 7, wobei

der Antriebsstrang mindestens ein zweites Getriebe (G, G2) aufweist, wobei eine Ausgangswelle (12, 122) eines der mindestens zwei Getriebe (G, G2) mit einem oder mehreren Rädern auf einer Seite einer Längsrichtung des Fahrzeugs verbunden ist, und eine Ausgangswelle (12, 122) eines anderen der mindestens zwei Getriebe (G, G2) mit einem oder mehreren Rädern auf der anderen Seite einer Längsrichtung des Fahrzeugs verbunden ist, und/oder wobei

eine Ausgangswelle (12, 122) eines der mindestens zwei Getriebe (G, G2) mit einem oder mehreren Rädern einer Achse des Fahrzeugs verbunden ist, und eine Ausgangswelle (12, 122) eines anderen der mindestens zwei Getriebe (G, G2) mit einem oder mehreren Rädern einer anderen Achse des Fahrzeugs verbunden ist.

9. Antriebsstrang nach Anspruch 8, wobei
der Antriebsstrang dazu ausgebildet ist, die Übersetzung zwischen der Primäreingangswelle (10, 102) und der Ausgangswelle (12, 122) der mindestens zwei Getriebe (G, G2), zumindest auf jeder Seite der Längsrichtung des Fahrzeugs, vorzugsweise radindividuell, über die Drehzahl der Sekundäreingangswellen (11, 112) der mindestens zwei Getriebe (G, G2) einzustellen.

10. Antriebsstrang nach einem der Ansprüche 2 bis 9, weiter aufweisend:

- zumindest eine Einrichtung zur Unterbrechung der Verbindung zwischen dem Umlaufgetriebe (UG, UG2) und der Primäreingangswelle (10, 102) des mindestens einen Getriebes (G, G2); und/oder
- zumindest eine Einrichtung zur Unterbrechung der Verbindung zwischen dem Umlaufgetriebe (UG, UG2) und der Sekundäreingangswelle (11, 112) des mindestens einen Getriebes (G, G2); und/oder
- zumindest eine Einrichtung zur Unterbrechung der Verbindung zwischen dem Umlaufgetriebe (UG, UG2) und der Ausgangswelle (12, 122) des mindestens einen Getriebes (G, G2).

11. Antriebsstrang nach einem der Ansprüche 6 bis 10, wobei
der Primärantrieb (1) einen Verbrennungs- und/oder ein Elektromotor aufweist, und/oder wobei der Sekundärantrieb (2) einen Elektromotor aufweist.

12. Fahrzeug, insbesondere Nutzfahrzeug, aufweisend einen Antriebsstrang nach einem der Ansprüche 1 bis 11, wobei die Ausgangswelle (12, 122) des mindestens einen Getriebes (G, G2) mit mindestens einem Rad des Fahrzeugs direkt oder über Zwischenelemente, vorzugsweise über ein Differential, verbunden ist.

13. Verfahren zur Steuerung eines Antriebsstrangs nach einem der Ansprüche 1 bis 11 mit den Schritten:

- Aufprägen einer Leistung auf die Primäreingangswelle (10, 102) des mindestens einen Getriebes (G, G2);
- Bestimmen einer benötigten Drehzahl der Sekundäreingangswelle (11, 112) des mindestens einen Getriebes (G, G2), um zwischen der Primäreingangswelle (10, 102) und der Ausgangswelle (12, 122) des mindestens einen Getriebes (G, G2) eine geforderte Übersetzung einzustellen;
- Aufprägen der benötigten Drehzahl auf die Sekundäreingangswelle (11, 112).

14. Verfahren nach Anspruch 13, wobei
die Übersetzung zwischen der Primäreingangswelle (10, 102) und der Ausgangswelle (12, 122), zumindest auf jeder Seite der Längsrichtung des Fahrzeugs, vorzugsweise radindividuell, über die Drehzahl der Sekundäreingangswelle (11, 112) eingestellt wird.

15. Verfahren nach einem der Ansprüche 13 oder 14, wobei
auf die Sekundäreingangswelle (11, 112) des mindestens einen Getriebes (G, G2) lediglich ein Drehmoment aufgeprägt wird, um die benötigte Drehzahl einzustellen.

16. Computerprogrammprodukt mit Codemitteln, die dazu ausgebildet sind, wenn sie auf einer Datenverarbeitungsanlage ausgeführt werden, einen Antriebsstrang nach einem der Ansprüche 1 bis 11 nach einem Verfahren nach einem der Ansprüche 13 bis 15 zu steuern.

**Claims**

1. Drive train for a vehicle, having at least one gearbox (G, G2), the at least one gearbox (G, G2) having the following:

- a primary input shaft (10, 102) which is designed to be connected to a primary drive (1);
- a secondary input shaft (11, 112) which is designed to be connected to a secondary drive (2, 22);
- an output shaft (12, 122) which is designed to output power which has been introduced into the at least one gearbox (G, G2) by means of the primary input shaft (10, 102); and
- a planetary gear train (UG, UG2) which is designed to steplessly adjust a gear ratio between the primary input shaft (10, 102) and the output shaft (12, 122) on the basis of the speed of the secondary input shaft (11, 112).

2. Drive train according to claim 1, wherein
the primary input shaft (10, 102), the secondary input shaft (11, 112) and/or the output shaft (12, 122) are directly connected to one of the shafts (4, 5, 6, 42, 52, 62) of the planetary gear train (UG, UG2).

3. Drive train according to claim 1 or 2, wherein
an intermediate gear unit (14, 142) is arranged between the primary input shaft (10, 102), the secondary input shaft (11, 112) and/or the output shaft (12, 122) on one side and the planetary gear train (UG, UG2) on the other.

4. Drive train according to any of the preceding claims, wherein
the primary input shaft (10, 102) is connected directly or via intermediate elements to a sun gear (6, 62) of the planetary gear train (UG, UG2), and/or the secondary input shaft (11, 112) is connected directly or via intermediate elements to a carrier shaft (5, 52) of the planetary gear train (UG, UG2), and/or the output shaft (12, 122) is connected directly or via intermediate elements to a ring gear (4, 42) of the planetary gear train (UG, UG2).

5. Drive train according to any of the preceding claims, wherein
the at least one gearbox (G, G2) has a path which leads from the primary input shaft (10, 102) exclusively via the planetary gear train (UG, UG2) to the output shaft (12, 122), and/or wherein the at least one gearbox (G, G2) has a further path which leads from the secondary input shaft (11, 112) exclusively via the planetary gear train (UG, UG2) to the output shaft (12, 122).

6. Drive train according to any of the preceding claims, further having

- a primary drive (1) which is connected or designed to be connected to the primary input shaft (10, 102) of the at least one gearbox (G, G2); and/or
- at least one secondary drive (2, 22) which is connected or designed to be connected to at least one secondary input shaft (11, 112) of the at least one gearbox (G, G2).

7. Drive train according to any of the preceding claims, wherein
the output shaft (12, 122) of the at least one gearbox (G, G2) is connected or designed to be connected directly or via intermediate elements, preferably via a differential, to at least one wheel of the vehicle.

8. Drive train according to claim 7, wherein

the drive train has at least one second gearbox (G, G2), wherein an output shaft (12, 122) of one of the at least two gearboxes (G, G2) is connected to one or more wheels on one side of a longitudinal direction of the vehicle, and an output shaft (12, 122) of another of the at least two gearboxes (G, G2) is connected to one or more wheels on the other side of a longitudinal direction of the vehicle, and/or wherein an output shaft (12, 122) of one of the at least two gearboxes (G, G2) is connected to one or more wheels of an axle of the vehicle, and an output shaft (12, 122) of another of the at least two gearboxes (G, G2) is connected to one or more wheels of another axle of the vehicle.

9. Drive train according to claim 8, wherein
the drive train is configured to set the gear ratio between the primary input shaft (10, 102) and the output shaft (12, 122) of the at least two gearboxes (G, G2), at least on each side of the longitudinal direction of the vehicle, preferably wheel-individually, via the speed of the secondary input shafts (11, 112) of the at least two gearboxes (G, G2).

10. Drive train according to any of claims 2 to 9, having

- at least one device for interrupting the connection between the planetary gear train (UG, UG2) and the primary input shaft (10, 102) of the at least one gearbox (G, G2); and/or
- at least one device for interrupting the connection between the planetary gear train (UG, UG2) and the secondary input shaft (11, 112) of the at least one gearbox (G, G2); and/or
- at least one device for interrupting the connection between the planetary gear train (UG, UG2) and the output shaft (12, 122) of the at least one gearbox (G, G2).

11. Drive train according to any of claims 6 to 10, wherein
the primary drive (1) has an internal combustion engine and/or an electric motor, and/or wherein the secondary drive (2) has an electric motor.

12. Vehicle, in particular commercial vehicle, having a drive train according to any of claims 1 to 11, wherein the output shaft (12, 122) of the at least one gearbox (G, G2) is connected to at least one wheel of the vehicle directly or via intermediate elements, preferably via a differential.

13. Method for controlling a drive train according to any of claims 1 to 11 with the steps:

    - applying a power to the primary input shaft (10, 102) of the at least one gearbox (G, G2);
    - determining a required speed of the secondary input shaft (11, 112) of the at least one gearbox (G, G2) in order to set a required gear ratio between the primary input shaft (10, 102) and the output shaft (12, 122) of the at least one gearbox (G, G2);
    - applying the required speed to the secondary input shaft (11, 112).

14. Method according to claim 13, wherein
the gear ratio between the primary input shaft (10, 102) and the output shaft (12, 122) is set via the speed of the secondary input shaft (11, 112), at least on each side of the longitudinal direction of the vehicle, preferably wheel-individually.

15. Method according to one of claims 13 or 14, wherein
a torque is applied to the secondary input shaft (11, 112) of the at least one gearbox (G, G2) solely to set the required speed.

16. Computer programme product with code means which are configured, when executed on a data processing system, to control a drive train according to any of claims 1 to 11 in a method according to any of claims 13 to 15.

**Revendications**

1. Chaîne cinématique d'un véhicule comprenant au moins une transmission (G, G2), dans lequel la au moins une transmission (G, G2) comporte ce qui suit :

    - un arbre (10, 102) d'entrée primaire, qui est constitué pour être relié à un entraînement (1) primaire ;
    - un arbre (11, 112) d'entrée secondaire, qui est constitué pour être relié à un entraînement (2, 22) secondaire ;
    - un arbre (12, 122) de sortie, qui est constitué pour céder de la puissance, qui a été envoyée par l'arbre (10, 102) d'entrée primaire dans la au moins une transmission (G, G2), **caractérisée par**
    - un train d'engrenage planétaire (UG, UG2), qui est constitué pour établir un réglage continu d'une transmission entre l'arbre (10, 102) d'entrée et l'arbre (12, 122) de sortie, sur la base de la vitesse de rotation de l'arbre (11, 112) d'entrée secondaire.

2. Chaîne cinématique suivant la revendication 1, dans laquelle
l'arbre (10, 102) d'entrée primaire, l'arbre (11, 112) d'entrée secondaire et/ou l'arbre (12, 122) de sortie sont reliés directement à l'un des arbres (4, 5, 6, 42, 52, 62) du train d'engrenage planétaire (UG, UG2).

3. Chaîne cinématique suivant la revendication 1 ou 2, dans laquelle
entre l'arbre (10, 102) d'entrée primaire, l'arbre (11, 112) d'entrée secondaire et/ou l'arbre (12, 122) de sortie d'une part et le train (UG, UG2) d'engrenage planétaire d'autre part, est montée une transmission (14, 142) intermédiaire.

4. Chaîne cinématique suivant l'une des revendications précédentes, dans laquelle
l'arbre (10, 102) d'entrée primaire est relié, directement ou par des éléments intermédiaires, à un pignon (6, 62) solaire du train d'engrenage planétaire (UG, UG2) et/ou l'arbre (11, 112) d'entrée secondaire est relié, directement ou par des éléments intermédiaires, à un porte-planète (5, 52) du train d'engrenage planétaire (UG, UG2) et/ou l'arbre (12, 122) de sortie est relié, directement ou par des éléments intermédiaires, à une couronne (4, 42) du train d'engrenage planétaire (UG, UG2).

5. Chaîne cinématique suivant l'une des revendications précédentes, dans laquelle
la au moins une transmission (G, G2) a un chemin, qui va de l'arbre (10, 102) d'entrée primaire à l'arbre (12, 122) de sortie exclusivement par le train d'engrenage planétaire (UG, UG2) et/ou, dans laquelle la au moins une transmission (G, G2) a un autre chemin, qui va de l'arbre (11, 112) d'entrée secondaire à l'arbre (12, 122) de sortie exclusivement par le train d'engrenage planétaire (UG, UG2).

6. Chaîne cinématique suivant l'une des revendications précédentes, comportant en outre :

   - un entraînement (1) primaire, qui est relié à l'arbre (10, 102) d'entrée primaire de la au moins une transmission (G, G2) ou qui est constitué pour y être relié ; et/ou
   - au moins un entraînement (2, 22) secondaire, qui est relié à au moins un arbre (11, 112) d'entrée secondaire de la au moins une transmission (G, G2) ou qui est constitué pour y être relié.

7. Chaîne cinématique suivant l'une des revendications précédentes, dans laquelle
l'arbre (12, 122) de sortie de la au moins une transmission (G, G2) est relié, directement ou par l'intermédiaire d'éléments intermédiaires, de préférence par un différentiel, à au moins une roue d'un véhicule, ou est constitué pour y être relié.

8. Chaîne cinématique suivant la revendication 7, dans laquelle

   la chaîne cinématique a au moins une deuxième transmission (G, G2), dans laquelle un arbre (12, 122) de sortie de l'une des au moins deux transmissions (G, G2) est relié à l'une ou à plusieurs roues d'un côté d'une direction longitudinale du véhicule, et un arbre (12, 122) d'une autre des au moins deux transmissions (G, G2) est relié à l'une ou à plusieurs roues de l'autre côté d'une direction longitudinale du véhicule, et/ou dans laquelle un arbre (12, 122) de sortie de l'une des au moins deux transmissions (G, G2) est relié à l'une ou à plusieurs roues d'un essieu du véhicule, et un arbre (12, 122) de sortie d'une autre des au moins deux transmissions (G, G2) est relié à l'une ou à plusieurs roues d'un autre essieu du véhicule.

9. Chaîne cinématique suivant la revendication 8, dans laquelle
la chaîne cinématique est constituée pour régler la transmission entre l'arbre (10, 102) d'entrée primaire et l'arbre (12, 122) de sortie des au moins deux transmissions (G, G2) au moins de chaque côté de la direction longitudinale du véhicule, de préférence individuellement par roue, par la vitesse de rotation des arbres (11, 112) d'entrée secondaires des au moins deux transmissions (G, G2).

10. Chaîne cinématique suivant l'une des revendications 2 à 9, comportant en outre :

    - au moins un dispositif d'interruption de la liaison entre le train d'engrenage planétaire (UG, UG2) et l'arbre (10, 102) d'entrée primaire de la au moins une transmission (G, G2) ; et/ou
    - au moins un dispositif d'interruption de la liaison entre le train d'engrenage planétaire (UG, UG2) et l'arbre (11, 112) d'entrée secondaire de la au moins une transmission (G, G2) ; et/ou
    - au moins un dispositif d'interruption de la liaison entre le train d'engrenage planétaire (UG, UG2) et l'arbre (12, 122) de sortie de la au moins une transmission (G, G2).

11. Chaîne cinématique suivant l'une des revendications 6 à 10, dans laquelle
l'entraînement (1) primaire a un moteur à combustion interne et/ou un moteur électrique, et/ou dans laquelle l'entraînement (2) secondaire a un moteur électrique.

12. Véhicule, notamment véhicule utilitaire, comportant une chaîne cinématique suivant l'une des revendications 1 à 11, dans lequel l'arbre (12, 122) de la au moins une transmission (G, G2) est relié, directement ou par l'intermédiaire d'éléments intermédiaires, de préférence par un différentiel, à au moins une roue du véhicule.

13. Procédé de commande d'une chaîne cinématique suivant l'une des revendications 1 à 11, comprenant les stades :

    - application d'une puissance à l'arbre (10, 102) d'entrée primaire de la au moins une transmission (G, G2) ;
    - détermination d'une vitesse de rotation nécessaire de l'arbre (11, 112) d'entrée secondaire de la au moins une transmission (G, G2), afin de régler une transmission demandée entre l'arbre (10, 102) d'entrée primaire et l'arbre (12, 122) de sortie de la au moins une transmission (G, G2) ;
- application de la vitesse de rotation nécessaire à l'arbre (11, 112) d'entrée secondaire.

14. Procédé suivant la revendication 13, dans lequel
on règle la transmission entre l'arbre (10, 102) d'entrée primaire et l'arbre (12, 122) de sortie au moins de chaque côté de la direction longitudinale du véhicule, de préférence individuellement par roue, par la vitesse de rotation de l'arbre (11, 112) d'entrée secondaire.

15. Procédé suivant l'une des revendications 13 ou 14, dans lequel
on applique seulement un couple à l'arbre (11, 112) d'entrée secondaire de la au moins une transmission (G, G2), pour régler la vitesse de rotation nécessaire.

16. Produit de programme d'ordinateur ayant des moyens de code, qui sont constitués pour, lorsqu'ils sont réalisés sur une installation de traitement de données, commander une chaîne cinématique suivant l'une des revendications 1 à 11 par un procédé suivant l'une des revendications 13 à 15.

Fig. 1

Fig. 2

Fig. 3

Fig. 4

EP 4 021 747 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012157255 A1
- US 2005119083 A1
- US 2014278041 A1
- CN 106560336 A